# EUROPEAN PATENT APPLICATION

(11) **EP 4 741 715 A1**
(43) Date of publication of application: **13.05.2026**
(21) Application number: 24856629.1
(22) Date of filing: 26.06.2024
(51) Int. Cl.: F24C 3/12, F24C 7/08, F24C 15/04, G03B 11/04, G03B 17/02, H04N 23/57, C03C 15/00

(54) **COOKING APPARATUS**

(30) Priority: 23.08.2023 KR 20230110641; 24.08.2023 KR 20230110947; 24.08.2023 KR 20230110948
(71) Applicant: LG Electronics Inc., Yeongdeungpo-gu Seoul 07336 (KR)
(72) Inventor: LEE, Yong Hyun, Seoul 08592 (KR); PARK, Kyoung Joon, Seoul 08592 (KR); LEE, Sangcheol, Seoul 08592 (KR); YANG, Hak Soon, Seoul 08592 (KR)
(74) Representative: Vossius & Partner Patentanwälte Rechtsanwälte mbB
(86) International application number: PCT/KR2024/008853
(87) International publication number: WO 2025/042014

(57) **Abstract**

An invention related to a cooking apparatus is disclosed. The disclosed invention comprises a camera disposed inside a door, and a light-blocking part for blocking an external light travel path, which is the travel path of light travelling to the camera after passing through at least a portion of a transparent window at the front side of the door.

## Description

### TECHNICAL FIELD

The present disclosure relates to a cooking appliance, and more particularly, to a cooking appliance including a camera for imaging an inside of a cooking chamber.

### BACKGROUND

A cooking appliance is one of home appliances for cooking food, and is a device installed in a kitchen space and used to cook food according to an intention of a user. Such a cooking appliance may be variously classified according to a heat source, a shape, or a type of fuel used.

When the cooking appliance is classified according to a type of cooking food, the cooking appliance may be classified into an open-type cooking appliance and a closed-type cooking appliance depending on a shape of a space on which food is placed. The closed-type cooking appliance includes an oven, a microwave oven, and the like, and the open-type cooking appliance includes a cooktop, a hob, and the like.

A closed-type cooking appliance is a cooking appliance configured to shield a space in which food is located and to heat the shielded space to cook food. In the closed-type cooking appliance, a chamber, that is, a cooking chamber, which is a space shielded when food is placed and when the food is intended to be cooked, is provided inside a main body. The cooking chamber becomes a space in which the food is substantially cooked. In the closed-type cooking appliance, a door for selectively opening and closing the cooking chamber is provided to be rotatable. The door is rotatably installed on a main body in which the cooking chamber is formed by a door hinge provided between the main body and the door. The door may selectively open and close the cooking chamber by rotating about a portion coupled to the main body through the door hinge.

A heat source is provided in an inner space of the cooking chamber that is opened and closed by the door so as to heat the cooking chamber. As the heat source, a gas burner, an electric heater, or the like may be used.

Recently, closed-type cooking appliances including an embedded camera have been developed. Such cooking appliances may obtain an image related to food accommodated inside the cooking chamber through the embedded camera. The image obtained by the embedded camera may be used to be displayed through a display provided in the cooking appliance or through a smart device of a user, and may be used as data for controlling a cooking operation of the cooking appliance.

When the image obtained by the embedded camera is used as data for controlling the cooking operation of the cooking appliance, the cooking appliance may analyze an image related to food obtained by the embedded camera to determine a type of the food or to determine a cooking progress degree of the food, and may control the cooking operation of the cooking appliance based on information analyzed in this manner.

An embedded camera providing the above-described function should be disposed at a position suitable for imaging an inside of a cooking chamber. To this end, the embedded camera is disposed at a position adjacent to the cooking chamber. For example, the embedded camera is generally disposed above a cavity forming the cooking chamber, or disposed inside a door facing the cooking chamber.

When the embedded camera is disposed inside the door, the embedded camera is typically disposed between a pair of glasses forming a transparent window of the door.

In general, the door includes a transparent window, and a user may check a state inside the cooking chamber from outside the cooking appliance through the transparent window. The transparent window may be formed by a single glass depending on a function provided by the cooking appliance, or may be formed by a combination of two or more glasses.

When the transparent window is formed by two or more glasses to improve thermal insulation performance of the door, the transparent window may be formed by a combination of an outer glass disposed at a foremost front side of the transparent window and at least one inner glass disposed at a rear side of the outer glass.

In the door including the transparent window formed as described above, the embedded camera is disposed in a space between the outer glass and the inner glass. The embedded camera disposed inside the door as described above receives light passing through the inner glass from inside the cooking chamber and images the inside of the cooking chamber.

When the embedded camera is disposed inside the door as described above, quality of an image captured by the camera may be degraded due to light emitted from an external light source. In addition, quality of an image captured by the camera may be degraded due to light emitted from internal lighting of the oven.

For example, light emitted from the external light source may pass through the outer glass and then be reflected by the inner glass. In addition, light emitted from the internal lighting of the oven may be reflected by the inner glass.

When such reflected light is captured by the embedded camera, problems may occur in that image quality of an image captured by the embedded camera is degraded, such as light blooming, flare phenomena, virtual images, and the like appearing in the image captured by the embedded camera.

### SUMMARY

### Technical Problems

An object of the present disclosure is to provide a cooking appliance having an improved structure so that quality of an image captured by a camera is less affected by light emitted from an external light source.

### Technical Solutions

In order to achieve the above object, a cooking appliance according to one embodiment of the present disclosure comprises a camera disposed inside a door, and a light-blocking part for blocking an external light travel path, which is a travel path of light travelling to the camera after passing through at least a portion of a transparent window at a front side of the door.

Through this, the present disclosure may provide an effect of allowing quality of an image captured by the camera to be less affected by light emitted from the external light source.

In another embodiment of the present disclosure, a cooking appliance comprises a camera disposed inside a door, and a light-blocking member disposed on a travel path of light travelling to the camera after passing through at least a portion of a transparent window formed in the door, wherein the light-blocking member is formed of a material having lower transparency than the transparent window.

In another embodiment of the present disclosure, a cooking appliance comprises a camera disposed inside a door, and a plurality of polarization members disposed on an external light travel path and transmitting light vibrating in the same direction as a polarization axis.

In another embodiment of the present disclosure, a cooking appliance comprises a camera disposed inside a door, and a light-blocking part for blocking a travel path of light travelling to the camera after passing through at least a portion of a transparent window formed in the door, wherein the light-blocking part includes a plurality of polarization members transmitting light vibrating in the same direction as a polarization axis.

A cooking appliance according to one aspect of the present disclosure comprises: a main body forming a cooking chamber therein; a door disposed at a front side of the main body to open and close the cooking chamber and forming a transparent window; a camera disposed inside the door; and a light-blocking member disposed on an external light travel path, which is a travel path of light travelling to the camera after passing through at least a portion of the transparent window at the front side of the door.

Preferably, the light-blocking member may be formed of a material having lower transparency than the transparent window.

In addition, the door may include an outer glass disposed at the front side of the main body, and an inner glass disposed between the main body and the outer glass.

In addition, the transparent window is preferably formed in an area in which the outer glass and the inner glass overlap each other in a front-rear direction.

In addition, the camera and the light-blocking member are preferably disposed in a space formed between the outer glass and the inner glass.

In addition, the light-blocking member preferably includes translucent or opaque glass.

In addition, the light-blocking member preferably includes etched glass having a surface subjected to an etching treatment.

In addition, the light-blocking member is preferably coupled to a rear surface of the outer glass.

In addition, the light-blocking member is preferably disposed to block a travel path of light travelling from a front side of the outer glass toward an area in which a receiving space and a field of view of the camera overlap each other.

In addition, the camera is preferably disposed at a position biased upward from a vertical center of the transparent window.

In addition, the light-blocking member is preferably disposed below the camera.

In addition, a cooking appliance according to another aspect of the present disclosure comprises: a main body forming a cooking chamber therein; a door disposed at a front side of the main body to open and close the cooking chamber and forming a transparent window; a camera disposed inside the door; and a light-blocking part for blocking an external light travel path, which is a travel path of light travelling to the camera after passing through at least a portion of the transparent window at the front side of the door.

Preferably, the light-blocking part may include a plurality of polarization members disposed on the external light travel path and transmitting light vibrating in the same direction as a polarization axis.

In addition, the polarization members may include a first polarization member disposed to block at least a portion of the transparent window, and a second polarization member having a polarization axis in a direction perpendicular to the polarization axis of the first polarization member.

In addition, the first polarization member may be installed on the transparent window, and the second polarization member may be installed on the camera.

In addition, the second polarization member is preferably disposed at a light-receiving portion through which light passes into an inside of the camera.

In addition, the door may include an outer glass disposed at the front side of the main body, and an inner glass disposed between the main body and the outer glass.

In addition, the transparent window is formed in an area in which the outer glass and the inner glass overlap each other in a front-rear direction, and the first polarization member is preferably installed on the outer glass.

In addition, the first polarization member is preferably disposed in a space formed between the outer glass and the inner glass.

In addition, in the front-rear direction, the second polarization member is preferably disposed between the first polarization member and the inner glass.

In addition, the first polarization member is preferably disposed to block a travel path of light travelling from a front side of the outer glass toward an area in which a receiving space and a field of view of the camera overlap each other.

In addition, the polarization members preferably include a polarization film attached to a light-receiving portion through which light passes into an inside of the camera or attached to the transparent window.

In addition, a cooking appliance according to another aspect of the present disclosure may comprise: a main body forming a cooking chamber therein; a door disposed at a front side of the main body to open and close the cooking chamber and forming a transparent window; a camera disposed inside the door; and a light-blocking part disposed on an external light travel path, which is a travel path of light travelling to the camera after passing through at least a portion of the transparent window at the front side of the door.

Preferably, the light-blocking part may include a light-blocking surface having a surface of the transparent window subjected to an etching treatment.

In addition, the door may include an outer glass disposed at the front side of the main body, and an inner glass disposed between the main body and the outer glass.

In addition, the transparent window is formed in an area in which the outer glass and the inner glass overlap each other in a front-rear direction, and the light-blocking part is preferably provided on the outer glass.

In addition, the light-blocking part preferably includes a light-blocking surface having a surface of the outer glass subjected to an etching treatment.

In addition, the light-blocking part preferably includes a portion of the outer glass formed to have lower transparency than the inner glass.

In addition, at least a portion of the outer glass is preferably formed of satin glass.

In addition, the light-blocking part preferably includes an area of the outer glass formed of satin glass.

In addition, the light-blocking part is preferably disposed to block a travel path of light travelling from a front side of the outer glass toward an area in which a receiving space and a field of view of the camera overlap each other.

In addition, the light-blocking part is preferably disposed below the camera.

In addition, the camera and the light-blocking part are preferably disposed at a position biased upward from a vertical center of the transparent window.

### Advantageous Effects

According to the present disclosure, The present disclosure may provide an effect of allowing imaging of food and checking an inside of a cooking chamber from outside the cooking appliance to be smoothly performed, while allowing quality of an image captured by the camera to be less affected by light emitted from an external light source and allowing the quality of the image captured by the camera to be improved.

### BRIEF DESCRIPTION OF DRAWINGS

The accompanying drawings constitute a part of the specification, illustrate one or more embodiments in the disclosure, and together with the specification, explain the disclosure, wherein:
FIG. 1 is a perspective view illustrating a cooking appliance according to a first embodiment of the present disclosure;
FIG. 2 is a side cross-sectional view illustrating an internal structure of the cooking appliance illustrated in FIG. 1;
FIG. 3 is a side cross-sectional view illustrating the door illustrated in FIG. 2 in a separated state;
FIG. 4 is an enlarged view illustrating an enlarged portion IV of FIG. 3;
FIG. 5 is a cross-sectional view schematically illustrating an operation of a light-blocking member according to the first embodiment of the present disclosure;
FIG. 6 is a side cross-sectional view illustrating a door according to a second embodiment of the present disclosure in a separated state;
FIG. 7 is an enlarged view illustrating an enlarged portion VII of FIG. 6;
FIG. 8 is a view illustrating light transmission states according to arrangement states of a first polarization member and a second polarization member;
FIG. 9 is a cross-sectional view schematically illustrating an operation of a light-blocking part according to a third embodiment of the present disclosure;
FIG. 10 is a side cross-sectional view illustrating the door illustrated in FIG. 2 in a separated state;
FIG. 11 is an enlarged view illustrating an enlarged portion XI of FIG. 10; and
FIG. 12 is a cross-sectional view schematically illustrating an operation of a light-blocking part according to a third embodiment of the present disclosure.

### DETAILED DESCRIPTION

The above-described aspects, features and advantages are specifically described hereafter with reference to accompanying drawings such that one having ordinary skill in the art to which the disclosure pertains can embody the technical spirit of the disclosure easily. In the *disclosure, detailed description* of known technologies in relation to the subject matter of the disclosure *is* omitted if it is deemed to *make* the *gist* of the *disclosure* unnecessarily *vague* Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components are not to be limited by the terms. Certainly, a first component can be a second component, unless stated to the contrary.

Embodiments are not limited to the embodiments set forth herein, and can be modified and changed in various different forms. The embodiments in the disclosure are provided such that the disclosure can be through and complete and fully convey its scope to one having ordinary skill in the art. Accordingly, *all modifications, equivalents or replacements as well as a replacement of the configuration of any one embodiment with the configuration of another embodiment or an addition of the configuration of any one embodiment to the configuration of another embodiment, within* the technical spirit and scope of the disclosure, *are to be included in* the scope of the disclosure.

The accompanying drawings are provided for a better understanding of the embodiments set forth herein and are not intended to limit the technical spirit of the disclosure. It is to be understood that *all the modifications, equivalents or replacements within* the spirit and technical scope of the disclosure *are included in* the scope of the disclosure. The sizes or thicknesses of the components in the drawings are exaggerated or reduced to ensure ease of understanding and the like. However, the protection scope of the subject matter of the disclosure is not to be interpreted in a limited way.

The terms in the disclosure are used only to describe specific embodiments or examples and not intended to limit the subject matter of the disclosure. In the disclosure, singular forms include plural forms as well, unless explicitly indicated otherwise. In the disclosure, the terms "comprise", "comprised of" and the like specify the presence of stated features, integers, steps, operations, elements, components or combinations thereof but do not imply the exclusion of the presence or addition of one or more other features, integers, steps, operations, elements, components or combinations thereof.

The terms "first", "second" and the like are used herein only to distinguish one component from another component, and the components are not to be limited by the terms.

When any one component is described as "connected" or "coupled" to another component, any one component can be directly connected or coupled to another component, but an additional component can be "interposed" between the two components or the two components can be "connected" or "coupled" by an additional component. When any one component is described as "directly connected" or "directly coupled" to another component, an additional component cannot be "interposed" between the two components or the two components cannot be "connected" or "coupled" by an additional component.

When any one component is described as being "on (or under)" another component, any one component can be directly on (or under) another component, and an additional component can be interposed between the two components.

Unless otherwise defined, all the terms including technical or scientific terms used herein have the same meaning as commonly understood by one having ordinary skill in the art. Additionally, terms such as those defined in commonly used dictionaries are to be interpreted as having a meaning that is consistent with their meaning in the context of the relevant art, and unless explicitly defined herein, are not to be interpreted in an ideal way or an overly formal way.

In the state where a cooking appliance stands on the floor, a direction in which a door is installed with respect to the center of the cooking appliance is defined as a forward direction. Accordingly, a direction toward the inside of the cooking appliance with the door open is defined as a rearward direction. For convenience, the forward direction and the rearward direction can be referred to as a first direction. Then the forward direction is referred to as one direction of the first direction, and the rearward direction is referred to as the other direction of the first direction.

Additionally, a gravitational direction can be defined as a downward direction, and a direction opposite to the gravitational direction can be defined as an upward direction.

Further, a horizontal direction across a front-rear direction of the cooking appliance, i.e., a widthwise direction of the cooking appliance that is seen in front of the door of the cooking appliance, can be referred to as a left-right direction. For convenience, the left-right direction can be referred to as a second direction. Then the right side can be referred to as one direction of the second direction, and the left side can be referred to as the other direction of the second direction.

Further, the widthwise direction of the cooking appliance can also be referred to as a lateral direction. Then the right side can also be referred to as one side of the lateral direction, and the left side can be referred to the other side of the lateral direction.

Additionally, an up-down direction can be referred to as a third direction. Then an upward direction can be referred to as one direction of the third direction, and a downward direction can be referred to as the other direction of the third direction.

Furthermore, the up-down direction can be referred to as a vertical direction. Then the front-rear direction and the left-right direction, i.e., the first direction and the second direction, can be referred to as the horizontal direction.

Throughout the disclosure, the terms "A and/or B" as used herein can denote A, B or A and B, and the terms "C to D" can denote C or greater and D or less, unless stated to the contrary.

### <First embodiment of cooking appliance>

### [Entire structure of cooking appliance]

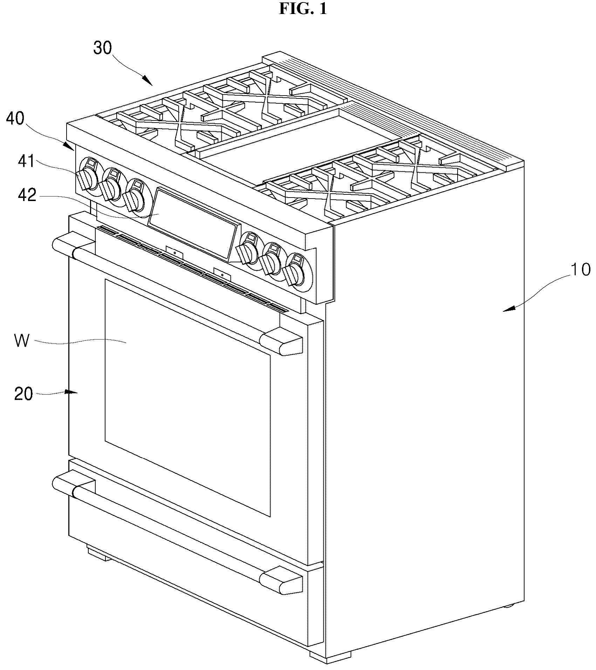

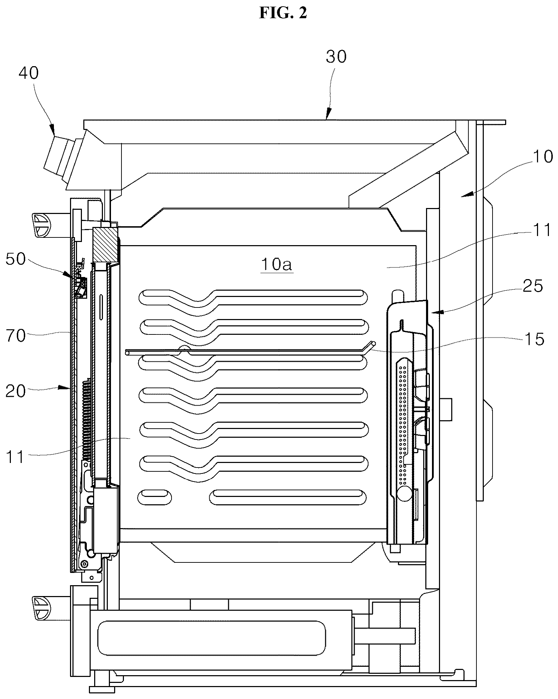

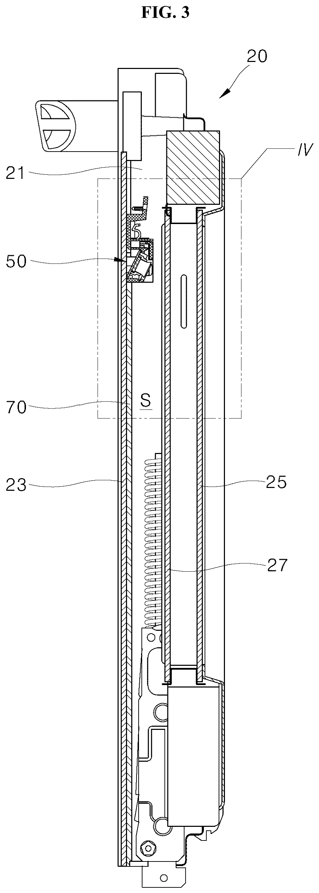

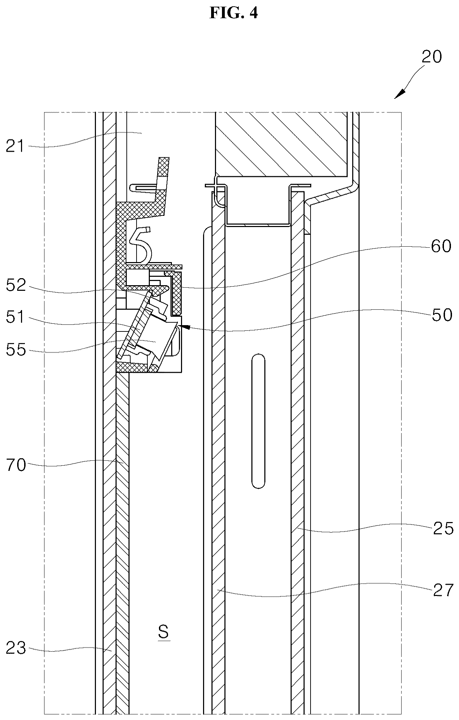

FIG. 1 is a perspective view illustrating a cooking appliance according to a first embodiment of the present disclosure, and FIG. 2 is a side cross-sectional view illustrating an internal structure of the cooking appliance illustrated in FIG. 1. In addition, FIG. 3 is a side cross-sectional view illustrating the door illustrated in FIG. 2 in a separated state, and FIG. 4 is an enlarged view illustrating an enlarged portion IV of FIG. 3.

Referring to FIGS. 1 to 3, a cooking appliance may have an exterior formed by a main body 10. The main body 10 may be provided in a form including a substantially hexahedral shape, and may be formed of a material having a predetermined strength so as to protect a plurality of components installed in an inner space thereof.

The main body 10 includes a cavity 11 forming a framework of the main body 10. The cavity 11 may be formed in a form of a hexahedron having a front side open, and a cooking chamber 10a is provided inside the cavity 11.

The cavity 11 may be formed in a form of a hexahedron having a front side open, and the cooking chamber 10a may be formed inside the cavity 11. That is, the cooking chamber 10a may be formed as a substantially hexahedral space disposed inside the cavity 11 and may be formed as a space opened forward.

In a state in which such a cooking chamber 10a is shielded, the inside of the cooking chamber 10a may be heated, whereby food may be cooked. That is, in the cooking appliance of the present embodiment provided as a sealed cooking appliance, the cooking chamber 10a is substantially a space in which food is cooked.

The cooking appliance includes a heating part for heating a cooking chamber 10a. The heating part may be provided as a heating device using gas fuel. As another example, the heating part may be provided as a heater using electricity. As described above, a structure of the heating part may be changed depending on a type of a heat source used.

In the present embodiment, the heating part is illustrated as being provided as a heating device using gas fuel. According to this, a broil burner may be provided above the cooking chamber 10a, and a convection device 13 may be provided at a rear side of the cooking chamber 10a.

The broil burner may heat an internal space of the cooking chamber 10a from an upper side. In addition, the convection device 13 may uniformly heat the internal space of the cooking chamber 10a by suctioning air in the internal space of the cooking chamber 10a, heating the air, and then discharging the heated air into the internal space of the cooking chamber 10a while allowing the air to flow.

The cooking appliance may include a door 20 configured to selectively open and close the cooking chamber 10a and provided to be pivotable. As an example, the door 20 may be provided in a pull-down manner in which an upper portion thereof pivots upward and downward about a lower end to open and close the cooking chamber 10a.

A cooktop part 30 provided to cook food by heating food or a container containing food may be disposed on an upper portion of the main body 10. The cooktop part 30 may be provided with a top plate forming an upper exterior and closing an upper end of the main body 10.

At least one heating part for heating food to be cooked or a container containing the food may be provided in a central portion of the cooktop part 30. For example, the heating part may be provided as a heating device using gas fuel.

As another example, the heating part may be provided as an induction heater using electricity. As such, a structure of the heating part may be changed depending on a type of a heat source used.

A control panel 40 may be provided at an upper front portion of a cooking appliance, that is, at an upper front portion of a cavity 11. The control panel 40 may form a portion of a front exterior of the cooking appliance. The control panel 40 may include a knob 41 for adjusting an operation of the cooking appliance, a display 42 displaying an operation state of the cooking appliance, and the like.

The cooking appliance of the present embodiment may include a rack 15 provided for placing food thereon. As an example, the rack 15 may be formed in a shape corresponding to a bottom surface shape of the cooking chamber 10a, for example, a substantially rectangular planar shape.

The rack 15 may support food from below and may be placed inside the cooking chamber 10a. The rack 15 may be used to place food supported on the rack 15 at a height desired by a user, and may be placed inside the cooking chamber 10a or drawn out to outside the cooking chamber 10a as needed.

In order for the rack 15 to be placed inside the cooking chamber 10a, support protrusions 12 may be provided inside the cooking chamber 10a. The support protrusions 12 may be respectively provided on both side walls of a cavity 11 forming both side surfaces of the cooking chamber 10a.

Each of the support protrusions 12 may be formed to protrude from a side wall of the cavity 11 toward an inside of the cooking chamber 10a. That is, each of the support protrusions 12 may be formed in a shape protruding convexly in a lateral direction from the side wall of the cavity 11 toward the cooking chamber 10a.

A plurality of support protrusions 12 are arranged along a vertical direction, and a plurality of support protrusions 12 may be provided on each side wall of the cavity 11 adjacent thereto. The support protrusions 12 provided on each side wall of the cavity 11 may be disposed to be spaced apart from other support protrusions 12 in the vertical direction by a predetermined interval.

In the present embodiment, seven support protrusions 12 are illustrated as being disposed on each side wall of the cavity 11. However, the present disclosure is not limited thereto, and the number of the support protrusions 12 may be increased or decreased as necessary in consideration of a size of a cooking appliance, or the like.

The rack 15 may be seated on any one of the support protrusions 12 arranged in a vertical direction and may be placed inside the cooking chamber 10a. A placement position of the rack 15 may vary depending on which one of the support protrusions 12 the rack 15 is seated on.

For example, when the rack 15 is seated on a support protrusion 12 disposed at a lowest position among the support protrusions 12, the rack 15 may be expressed as being placed at a first level. As another example, when the rack 15 is seated on a support protrusion 12 disposed at a third position from below among the support protrusions 12, the rack 15 may be expressed as being placed at a third level.

### [Structure of door]

Referring to FIGS. 2 to 3, the door 20 may include a door frame 21 and an outer glass 23.

The door frame 21 forms a framework of the door 20, and may form an upper surface, a lower surface, and side appearances of the door 20. The door frame 21 may be formed in a hexahedral shape having front and rear sides opened.

A hinge for pivotably coupling the door frame 21 to the main body 10 may be installed at a lower side of the door frame 21. The hinge may be installed at a lower end of the door frame 21, and may be respectively installed at both lateral sides of the door frame 21.

A through-hole may be provided in the door frame 21, and the through-hole may be formed in a hollow shape penetrating the door frame 21 in a front-rear direction. The door frame 21 including the through-hole may be formed in a substantially " 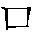 "-shaped configuration.

A transparent window W may be formed at a portion where the through-hole is formed. The outer glass 23 is disposed at the front side of the main body 10, and may form at least a portion of the transparent window W. As an example, the outer glass 23 may be provided in a form including a glass through which the cooking chamber 10a is visible from outside the door 20.

The outer glass 23 may cover the through-hole and may be coupled to the door frame 21. The outer glass 23 is disposed at a foremost front side of the transparent window W to form a front surface of the transparent window W, and together with the door frame 21, may form a front exterior appearance of the door 20.

In addition, the door 20 may further include at least one inner glass 25, 27. The inner glasses 25, 27 are disposed between the outer glass 23 and the main body 10, and together with the outer glass 23, may form the transparent window W. As an example, the inner glasses 25, 27, similarly to the outer glass 23, may be provided in a form including glasses through which the cooking chamber 10a is visible from outside the door 20.

In the present embodiment, the door 20 is illustrated as having three glasses disposed therein. For example, when the transparent window W is formed by three glasses, two inner glasses 25, 27, that is, a rear glass 25 and a mid glass 27, may be disposed between the outer glass 23 and the main body 10.

The rear glass 25 may be coupled to the door frame 21 at a rear side of the door frame 21 and may form a rear exterior appearance of the door 20. In a front-rear direction, the mid glass 27 may be disposed between the outer glass 23 and the rear glass 25. The mid glass 27 may be coupled to the door frame 21 between the outer glass 23 and the rear glass 25.

In the present embodiment, one mid glass 27 is illustrated as being provided between the outer glass 23 and the rear glass 25. As another example, two or more mid glasses 27 may be provided between the outer glass 23 and the rear glass 25.

By the glasses 23, 25, 27 provided in the door 20 as described above, an interior of the door 20 may be partitioned into a plurality of spaces arranged in the front-rear direction. The glasses 23, 25, 27 disposed as described above may form the transparent window W allowing a user to check an inside of the cooking chamber 10a, and at the same time, may suppress heat transmitted from inside the cooking chamber 10a to the door 20 from being transmitted to a front side of the door 20.

External air may flow into the interior of the door 20 in which the mid glasses 27 are disposed as described above. For example, external air may flow into the interior of the door 20 through an opened upper end of the door 20. As described above, air flowing into an interior of the door 20 may pass through the interior of the door 20 and may cool the door 20.

### [Structure of camera]

The cooking appliance of the present embodiment may include a camera 50, as illustrated in FIGS. 2 to 4. The camera 50 may be installed inside the cooking appliance and may be provided to image the cooking chamber 10a.

The camera 50 may be disposed at a front side of the cooking chamber 10a. As an example, the camera 50 may be installed in the door 20. The camera 50 may acquire images related to food accommodated in the cooking chamber 10a by imaging an inside of the cooking chamber 10a from an upper front side of the cooking chamber 10a.

The camera 50 may include an image processing part 51. The image processing part 51 may include one or more image sensors. As the image sensors, a CCD, a CMOS, or the like may be used. As an example, the image sensor may be provided in a form mounted on a circuit board 52. In this case, the image sensor may be disposed on a rear surface of the circuit board 52 facing the cooking chamber 10a.

In addition, the camera 50 may include a lens part 55. The lens part 55 may include at least one lens. As an example, the lens part 55 may be provided in a form in which a plurality of lenses disposed along a front-rear direction are accommodated in a barrel.

The lens part 55 collects light reflected from an object to form an optical image on an imaging area, and the image sensor may receive light incident through the lens part 55 and convert the light into an image signal.

In addition, the camera 50 may further include various processors necessary for forming an image based on the image signal output from the image sensor, and may further include lighting composed of an LED or the like.

The camera 50 may be disposed inside the door 20. The camera 50 may be disposed in an area of the door 20 in which the transparent window W is formed.

More specifically, the camera 50 may be disposed between the outer glass 23 and the mid glass 27. That is, the camera 50 may be disposed inside the door 20 and disposed in a space S formed between the outer glass 23 and the mid glass 27 spaced apart from each other in a front-rear direction (hereinafter, referred to as an "accommodation space").

Since the accommodation space S is a space disposed at a position relatively farther from the cooking chamber 10a than a space between the inner glass 25 and the mid glass 27, it is preferable that the camera 50 is disposed in the accommodation space S so that the camera 50 is less affected by influences transmitted from the cooking chamber 10a.

The camera 50 disposed inside the door 20 as described above may receive light passing through the inner glasses 25, 27 and the mid glass 27 from inside the cooking chamber 10a and may image the inside of the cooking chamber 10a.

As an example, the camera 50 may be disposed at a position biased upward from a vertical center of the door 20. The camera 50 may also be disposed at a position biased upward from a vertical center of the cooking chamber 10a with respect to the cooking chamber 10a. In a left-right direction, the camera 50 may be disposed substantially at a center of the door 20.

The camera 50 disposed as described above may be provided to face the cooking chamber 10a from a front side of the cooking chamber 10a and to look down at the cooking chamber 10a from a front side of an upper region of the cooking chamber 10a.

In addition, the camera 50 may be disposed at a position biased upward in the transparent window W. As an example, the camera 50 may be disposed adjacent to an uppermost boundary surface of the transparent window W.

The camera 50 disposed as described above may be disposed not only at a position capable of effectively imaging food inside the cooking chamber 10a, but also at a position that obstructs a view through the transparent window W to a lesser extent.

The camera 50 may image an inside of the cooking chamber 10a, and may image an area falling within a field of view of the camera 50. In the present embodiment, the field of view of the camera 50 is illustrated as being set as follows.

In a vertical direction, the field of view of the camera 50 may be set such that both a front-side end of the rack 15 placed at a lowermost level, for example, a first level, and a front-side end of the rack 15 placed at an uppermost level, for example, a seventh level, are included in an imaging range of the camera 50. In addition, in a left-right direction, the field of view of the camera 50 may be set such that both a left end and a right end of the rack 15 are included in the imaging range of the camera 50.

Meanwhile, the cooking appliance of the present embodiment may further include a support member 60. The support member 60 may be provided to fix the camera 50 inside the door 20. In the present embodiment, the support member 60 is illustrated as being fixed to the outer glass 23.

### [First example of structure of light-blocking member]

The cooking appliance of the present embodiment may include a light-blocking member 70 installed inside the door 20. The light-blocking member 70, similarly to the camera 50, may be disposed in an area of the door 20 in which the transparent window W is formed.

The light-blocking member 70 is provided to block a travel path of light travelling to the camera 50 after passing through at least a portion of the transparent window W from a front side of the door 20 (hereinafter, referred to as an "external light travel path"). The light-blocking member 70 is provided on the transparent window W and may be disposed on the external light travel path.

The light-blocking member 70 may be formed of a material having lower transparency than the transparent window W. As an example, the light-blocking member 70 may include glass formed of a material having lower transparency than the transparent window W. As another example, the light-blocking member 70 may include a film or a panel formed of a synthetic resin material having lower transparency than the transparent window W.

In the present embodiment, the light-blocking member 70 is illustrated as including translucent or opaque glass. For example, the light-blocking member 70 may include etched glass having a surface subjected to an etching treatment, or may be provided in a form of etched glass. The light-blocking member 70 including etched glass or provided in the form of etched glass as described above may form a surface having a fog-like appearance.

In the present embodiment, the light-blocking member 70 is illustrated as being provided in the form of etched glass. The light-blocking member 70 may be disposed between the outer glass 23 and the inner glasses 25, 27. That is, in a front-rear direction, the light-blocking member 70 may be disposed between the outer glass 23 and the mid glass 27. Preferably, the light-blocking member 70 may be coupled to a rear surface of the outer glass 23.

The light-blocking member 70 installed inside the door 20 as described above may transmit only a portion of light travelling from a front side of the door 20 toward an interior of the door 20, and may block another portion of the light from passing through the light-blocking member 70. That is, the light-blocking member 70 may reduce an amount of light flowing into the interior of the door 20 from the front side of the door 20 along the external light travel path.

The light-blocking member 70 may reduce an amount of light flowing into the interior of the door 20 from the front side of the door 20 along the external light travel path.

### [Operation and effects of light-blocking member]

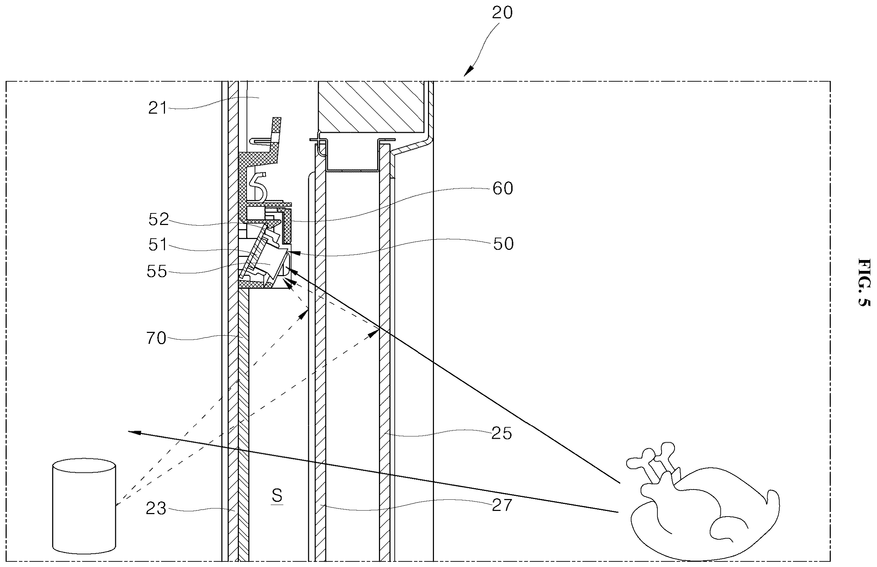

FIG. 5 is a cross-sectional view schematically illustrating an operation of the light-blocking member according to the first embodiment of the present disclosure.

Hereinafter, operation and effects of the cooking appliance according to the first embodiment of the present disclosure will be described with reference to FIGS. 2 and 5.

Referring to FIGS. 2 and 5, the camera 50 and the light-blocking member 70 according to the present embodiment may be disposed in an area of the door 20 in which the transparent window W is formed.

When viewed in a lateral direction, the light-blocking member 70 may be disposed below the camera 50. The light-blocking member 70 as described above may form a translucent layer or an opaque layer that blocks a travel path of light travelling from below the camera 50 toward an area within a field of view of the camera 50.

As an example, the light-blocking member 70 may form a translucent layer or an opaque layer that blocks a travel path of light travelling from a front side of the outer glass 23 toward an area in which the accommodation space S and the field of view of the camera 50 overlap.

Light emitted from an external light source may pass through the outer glass 23 from a front side of the door 20 and then be reflected by the inner glasses 25, 27. When light passing through the outer glass 23 from the front side of the door 20 enters an area in which the accommodation space S and the field of view of the camera 50 overlap (hereinafter, referred to as an "overlapping area"), a likelihood increases that light reflected by the inner glasses 25, 27 after entering the overlapping area is captured by the camera 50.

For example, light passing through the outer glass 23 from the front side of the door 20 may be reflected toward the camera 50 by the mid glass 27 within the overlapping area, and the reflected light may be captured by the camera 50.

When reflected light within the overlapping area is captured by the camera 50 as described above, problems may occur in that image quality of an image captured by the camera 50 is degraded, such as light blooming, flare phenomena, virtual images, and the like appearing in the image captured by the camera 50.

In consideration of the above, in the present embodiment, the light-blocking member 70 is disposed on a travel path of light travelling from the front side of the outer glass 23 toward the overlapping area, that is, on the external light travel path.

According to this, the light-blocking member 70 may form a translucent layer or an opaque layer that blocks a travel path of light travelling from the front side of the door 20 and from below the camera 50 toward the overlapping area at a position below the camera 50.

Light travelling from the front side of the door 20 along the external light travel path encounters the translucent layer or the opaque layer formed by the light-blocking member 70 while passing through the transparent window W. The translucent layer or the opaque layer formed by the light-blocking member 70 transmits only a portion of light travelling along the external light travel path, and accordingly, an amount of light flowing into the interior of the door 20 from the front side of the door 20 along the external light travel path may be reduced.

That is, only a small amount of light among light travelling from a front side of the door 20 along the external light travel path passes through the light-blocking member 70 and travels toward the overlapping area.

A portion of the light that has passed through the light-blocking member 70 and travelled toward the overlapping area as described above may be reflected by the rear glass 25 or the mid glass 27 and then travel toward the camera 50.

However, in the cooking appliance of the present embodiment, only a portion of light travelling from the front side of the door 20 along the external light travel path is able to pass through the light-blocking member 70, and only a portion of the light is able to be reflected by the rear glass 25 or the mid glass 27 and then travel toward the camera 50.

That is, in the cooking appliance of the present embodiment, an amount of light incident on the camera 50 after being reflected by the rear glass 25 or the mid glass 27 (hereinafter, referred to as "reflected light") is significantly reduced compared to an amount of light travelling from the front side of the door 20 along the external light travel path.

Accordingly, even if the reflected light as described above is captured to some extent by the camera 50, the reflected light does not substantially affect an image captured by the camera 50.

If the light-blocking member 70 forms an opaque layer on the transparent window W, light travelling from the front side of the door 20 along the external light travel path is not able to pass through the light-blocking member 70. In this case, reflected light is not able to be generated inside the door 20, and thus the reflected light is not able to affect an image captured by the camera 50.

Meanwhile, light reflected by food inside the cooking chamber 10a may pass through the inner glasses 25, 27 and be incident into the camera 50. Since light passing through the inner glasses 25, 27 from inside the cooking chamber 10a is light that has not passed through the light-blocking member 70, the light may be smoothly incident into the camera 50.

Accordingly, imaging of food accommodated inside the cooking chamber 10a may be smoothly performed without being interfered with by the light-blocking member 70.

In addition, light reflected by food inside the cooking chamber 10a may pass through the inner glasses 25, 27 and the outer glass 23 and be emitted toward a front side of the door 20. When light inside the cooking chamber 10a passes through the light-blocking member 70, an image of an inside of the cooking chamber 10a may appear slightly blurred when viewed from outside the cooking chamber 10a.

When the light-blocking member 70 is provided only in a partial area of the transparent window W, for example, in an upper partial area of the outer glass 23, light inside the cooking chamber 10a may pass through the inner glasses 25, 27 and the outer glass 23 without passing through the light-blocking member 70 and be emitted toward the front side of the door 20. In this case, an image of an inside of the cooking chamber 10a may appear very clear when viewed from outside the cooking chamber 10a.

In summary, the cooking appliance of the present embodiment may allow light travelling from inside the cooking chamber 10a toward the camera 50 or toward the front side of the door 20 to travel smoothly, while effectively blocking reflected light generated inside the door 20 due to an external light source from being incident on the camera 50.

Accordingly, the cooking appliance of the present embodiment may provide an effect of allowing imaging of food and checking an inside of the cooking chamber 10a from outside the cooking appliance to be smoothly performed, while reducing an influence of light emitted from an external light source on image quality of an image captured by the camera, thereby improving image quality of the image captured by the camera.

### <Second embodiment of cooking appliance>

### [Second example of structure of light-blocking part]

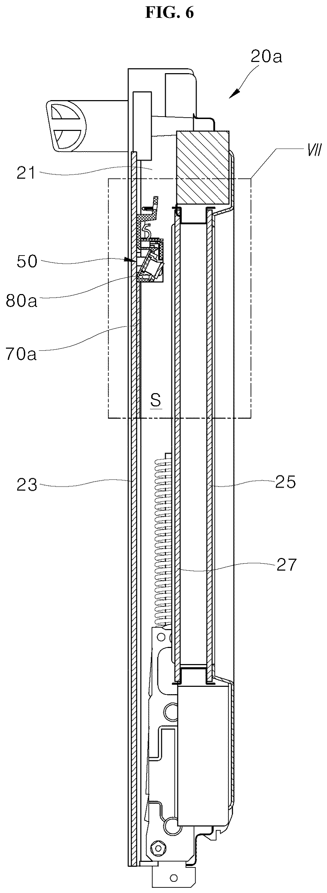

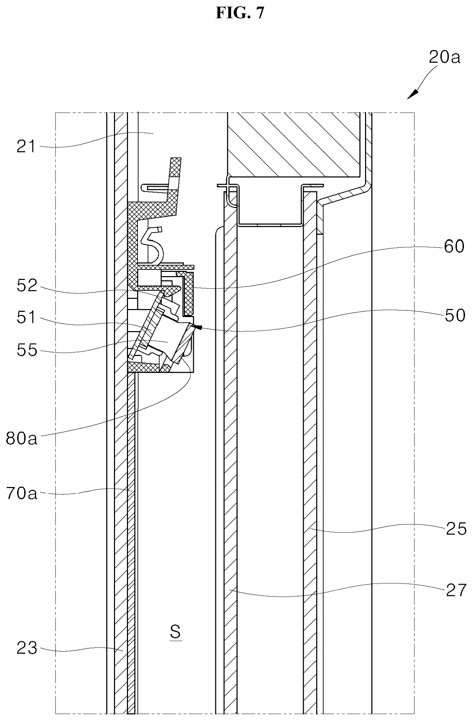

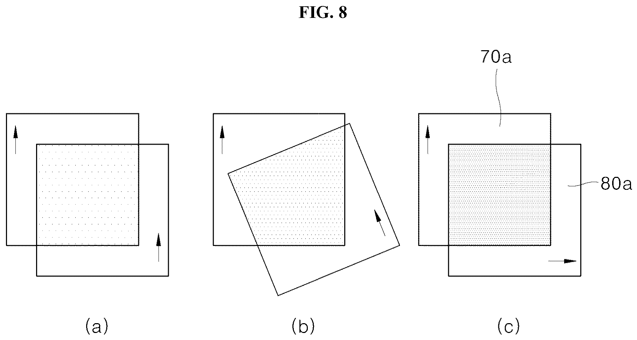

FIG. 6 is a side cross-sectional view illustrating a door according to a second embodiment of the present disclosure in a separated state, FIG. 7 is an enlarged view illustrating an enlarged portion "VII" of FIG. 6 in an enlarged manner, and FIG. 8 is a view illustrating a light transmission state according to an arrangement state of a first polarization member and a second polarization member.

Referring to FIGS. 2 and 6 to 8, the cooking appliance according to the second embodiment of the present disclosure may include a light-blocking part installed inside a door 20a. The light-blocking part may be disposed in an area of the door 20a in which the transparent window W is formed, similarly to the camera 50.

The light-blocking part may be disposed in a space S between the outer glass 23 and the inner glasses 25, 27 (hereinafter, referred to as an "accommodation space"). As an example, the light-blocking part may be disposed together with the camera 50 in a space formed between the outer glass 23 and the mid glass 27. The light-blocking part may be disposed in the same space as the camera 50 and may be disposed adjacent to the camera 50.

The light-blocking part is provided to block a travel path of light travelling to the camera 50 after passing through at least a portion of the transparent window W from a front side of the door 20a (hereinafter, referred to as an "external light travel path").

The light-blocking part may include a plurality of polarization members 70, 80. Each of the polarization members 70, 80 may be disposed on the external light travel path and may transmit light vibrating in a direction identical to a polarization axis of the polarization member 70, 80.

The polarization members 70, 80 may include a first polarization member 70a and a second polarization member 80a. The first polarization member 70a may be disposed to block at least a portion of the transparent window W. The second polarization member 80a may be formed to have a polarization axis in a direction perpendicular to a polarization axis of the first polarization member 70a.

Referring to FIG. 8(a), when two polarizing members overlap such that polarization axes of the two polarizing members are parallel to each other, light may pass through a portion where the two polarizing members overlap. In contrast, when the two polarizing members overlap such that the polarization axes of the two polarizing members are inclined relative to each other, an amount of light passing through the portion where the two polarizing members overlap is reduced (refer to FIG. 8(b)). As illustrated in FIG. 8(c), when the two polarizing members 70, 80 overlap such that the polarization axes of the two polarizing members 70, 80 are perpendicular to each other, the passage of light through the portion where the two polarizing members 70, 80 overlap is blocked.

That is, the light-blocking part as illustrated in FIGS. 2 to 7 may block movement of light travelling along the external light travel path by using a combination of a first polarization member 70a configured to transmit light vibrating in a direction identical to a polarization axis thereof and a second polarization member 80a having a polarization axis in a direction perpendicular to the polarization axis of the first polarization member 70a.

The first polarization member 70a may be installed on the transparent window W. The first polarization member 70a may be installed on the outer glass 23. As an example, the first polarization member 70a may be disposed in a space between the outer glass 23 and the inner glasses 25, 27, that is, in the accommodation space S. The first polarization member 70a may be installed on a rear surface of the outer glass 23.

As another example, the first polarization member 70a may be installed on a front surface of the outer glass 23.

The second polarization member 80a may be installed on the camera 50. The second polarization member 80a may be disposed at a light incident portion through which light passes into an interior of the camera 50. As an example, the second polarization member 80a may be installed on the lens part 55 or may be installed at a position adjacent to the lens part 55.

The second polarization member 80a installed as described above may be disposed in the accommodation space S and may be disposed at a rear side of the first polarization member 70a. That is, in a front-rear direction, the second polarization member 80a may be disposed between the first polarization member 70a and the inner glasses 25, 27.

In the present embodiment, the polarization members 70, 80 are illustrated as being provided in a form of polarization films. According to this, the first polarization member 70a may include a polarization film attached to the transparent window W, and the second polarization member 80a may include a polarization film attached to the lens part 55 of the camera 50.

### [Operation and effects of light-blocking part]

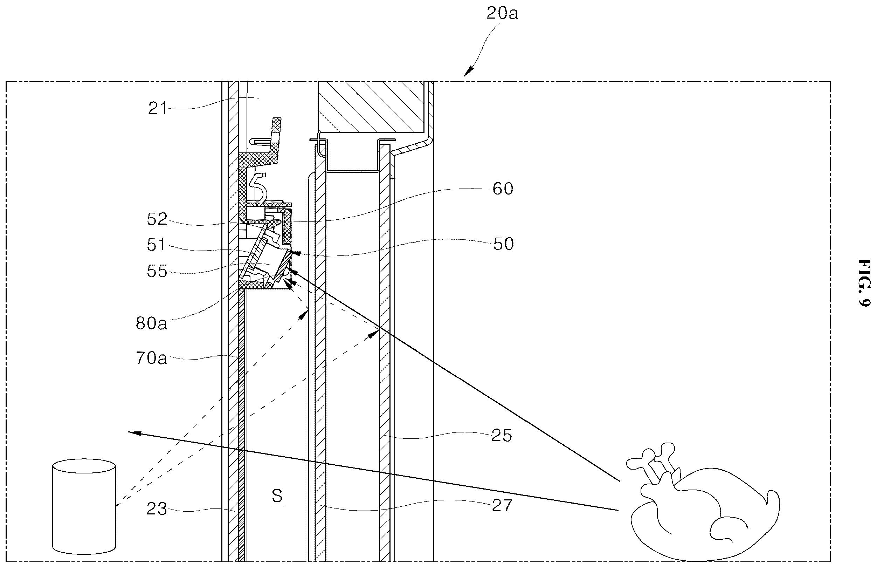

FIG. 9 is a cross-sectional view schematically illustrating an operation of a light-blocking part according to a third embodiment of the present disclosure.

Hereinafter, operation and effects of the cooking appliance according to one embodiment of the present disclosure will be described with reference to FIGS. 2 and 9.

Referring to FIGS. 2 and 9, the camera 50 and the light-blocking part according to the present embodiment may be disposed in an area of the door 20a in which the transparent window W is formed, and may be disposed inside the door 20a, that is, in the accommodation space S.

When viewed in a lateral direction, the first polarization member 70a may be disposed below the camera 50. The light-blocking part as described above may form a polarization layer that blocks a space between the outer glass 23 and the mid glass 27 in a space between the outer glass 23 and the mid glass 27, that is, in the accommodation space S.

As an example, the first polarization member 70a may form a polarization layer that blocks a travel path of light travelling from below the camera 50 toward an area within the field of view of the camera 50. Preferably, the first polarization member 70a may form a polarization layer that blocks a travel path of light travelling from a front side of the outer glass 23 toward an area in which the accommodation space S and the field of view of the camera 50 overlap.

In addition, the second polarization member 80a may form a polarization layer that blocks a travel path of light travelling toward a light incident portion of the camera 50 from a rear side of the camera 50.

Light emitted from an external light source may pass through the outer glass 23 from a front side of the door 20a and then be reflected by the inner glasses 25, 27. When light passing through the outer glass 23 from the front side of the door 20a enters an area in which the accommodation space S and the field of view of the camera 50 overlap (hereinafter, referred to as an "overlapping area"), a likelihood increases that light reflected by the inner glasses 25, 27 after entering the overlapping area is captured by the camera 50.

For example, light passing through the outer glass 23 from the front side of the door 20a may be reflected toward the camera 50 by the mid glass 27 within the overlapping area, and the reflected light may be captured by the camera 50.

When reflected light within the overlapping area is captured by the camera 50 as described above, problems may occur in that image quality of an image captured by the camera 50 is degraded, such as light blooming, flare phenomena, virtual images, and the like appearing in the image captured by the camera 50.

In consideration of the above, in the present embodiment, the first polarization member 70a and the second polarization member 80a are disposed on a travel path of light travelling from the front side of the outer glass 23 toward the overlapping area, that is, on the external light travel path.

According to this, the first polarization member 70a may form a polarization layer that blocks a travel path of light travelling from the front side of the door 20a and from below the camera 50 toward the overlapping area at a position below the camera 50. In addition, the second polarization member 80a may form a polarization layer that blocks a travel path of light travelling toward a light incident portion of the camera 50 from a rear side of the camera 50.

Light travelling from a front side of the door 20a along the external light travel path encounters the polarization layer formed by the first polarization member 70a while passing through the transparent window W. The polarization layer formed by the first polarization member 70a transmits only light vibrating in a direction identical to a polarization axis of the first polarization member 70a, and accordingly, only light vibrating in the direction identical to the polarization axis of the first polarization member 70a passes through the first polarization member 70a and travels toward the overlapping area.

A portion of light passing through the outer glass 23 from the front side of the door 20a may be reflected by the rear glass 25 or the mid glass 27. Among the light, light reflected by the rear glass 25 or the mid glass 27 in the overlapping area may travel toward the light incident portion of the camera 50. The light travelling in this manner encounters the polarization layer formed by the second polarization member 80a on a path moving toward the light incident portion of the camera 50.

The light encountering the polarization layer formed by the second polarization member 80a as described above is light that has previously passed through the first polarization member 70a and vibrates in the direction identical to the polarization axis of the first polarization member 70a. Such light is not able to pass through the second polarization member 80a having a polarization axis in a direction perpendicular to the polarization axis of the first polarization member 70a.

Accordingly, among light passing through the outer glass 23 from the front side of the door 20a, light reflected by the rear glass 25 or the mid glass 27 in the overlapping area is not able to be incident into the camera 50. That is, light travelling from the front side of the door 20a along the external light travel path is not able to be incident into the camera 50.

In contrast, light reflected by food inside the cooking chamber 10a may pass through the inner glasses 25, 27 and the second polarization member 80a and be incident into the camera 50. Since light passing through the inner glasses 25, 27 from inside the cooking chamber 10a is light that has not passed through the first polarization member 70a, among the light, light vibrating in a direction identical to the polarization axis of the second polarization member 80a may pass through the second polarization member 80a and be incident into the camera 50.

Accordingly, imaging of food accommodated inside the cooking chamber 10a may be smoothly performed without being interfered with by the polarization members 70, 80.

In addition, light reflected by food inside the cooking chamber 10a may pass through the inner glasses 25, 27 and the outer glass 23 and be emitted toward a front side of the door 20a. Since light passing through the inner glasses 25, 27 from inside the cooking chamber 10a is light that has not passed through the second polarization member 80a, among the light, light vibrating in a direction identical to the polarization axis of the first polarization member 70a may pass through the first polarization member 70a and be emitted toward the front side of the door 20a.

Accordingly, light inside the cooking chamber 10a may be emitted to outside the cooking chamber 10a without being interfered with by the polarization members 70, 80, and thus checking the inside of the cooking chamber 10a from outside the cooking appliance may be smoothly performed without being interfered with by the polarization members 70, 80.

In summary, the cooking appliance of the present embodiment allows light travelling from inside the cooking chamber 10a toward the camera 50 or toward the front side of the door 20a to travel smoothly, while effectively blocking reflected light generated inside the door 20a due to an external light source from being incident on the camera 50.

Accordingly, the cooking appliance of the present embodiment provides an effect of allowing imaging of food or checking the inside of the cooking chamber 10a from outside the cooking appliance to be smoothly performed, while reducing an influence of light emitted from an external light source on image quality of an image captured by the camera, thereby improving image quality of the image captured by the camera.

### <Third embodiment of cooking appliance>

### [Third example of structure of light-blocking part]

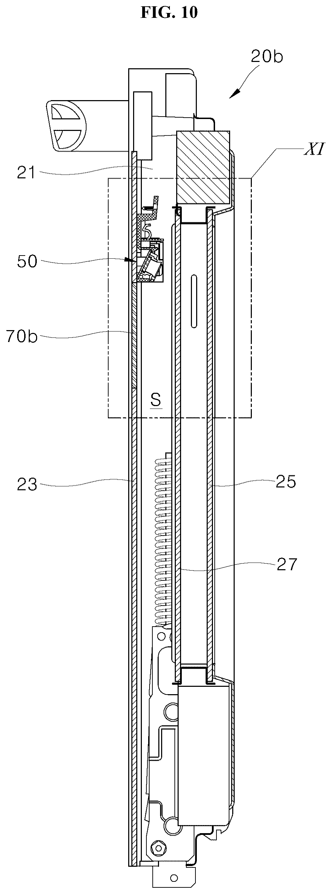

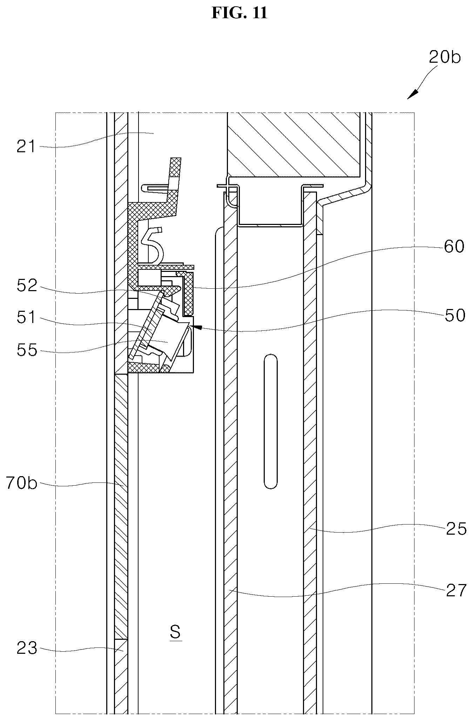

FIG. 10 is a side cross-sectional view illustrating the door shown in FIG. 2 in a separated state, and FIG. 11 is an enlarged view illustrating an enlarged portion "XI" of FIG. 10.

Referring to FIGS. 2, 10, and 11, a cooking appliance according to a third embodiment of the present disclosure may include a light-blocking part 70b installed inside a door 20b. The light-blocking part 70b may be disposed in an area of the door 20b in which the transparent window W is formed, similarly to the camera 50.

The light-blocking part 70b is provided to block a travel path of light travelling to the camera 50 after passing through at least a portion of the transparent window W from a front side of the door 20b (hereinafter, referred to as an "external light travel path").

The light-blocking part 70b may include a light-blocking surface. The light-blocking surface may be provided on the transparent window W and may be disposed on the external light travel path.

As an example, the light-blocking surface may be formed in a form in which a surface of the transparent window W is subjected to an etching treatment. The light-blocking surface may be formed to have lower transparency than another area of the transparent window W in which the light-blocking surface is not formed. For example, when another area of the transparent window W in which the light-blocking surface is not formed is formed of transparent glass, the light-blocking surface may be formed of translucent or opaque glass.

In the present embodiment, the light-blocking part 70b is illustrated as being provided on the outer glass 23. In this case, the light-blocking part 70b may include a light-blocking surface formed by subjecting a surface of the outer glass 23 to an etching treatment.

As an example, the light-blocking surface may be formed to have lower transparency than another area of the outer glass 23 in which the light-blocking surface is not formed. As another example, an entirety of the outer glass 23 may be formed to have lower transparency than the inner glasses 25, 27.

The light-blocking part 70b including the light-blocking surface formed as described above may transmit only a portion of light travelling from a front side of the door 20b toward an interior of the door 20b, and may block another portion of the light from passing through the light-blocking part 70b. That is, the light-blocking part 70b may reduce an amount of light flowing into the interior of the door 20b from the front side of the door 20b along the external light travel path.

In the present embodiment, the light-blocking part 70b is illustrated as being provided in a form of satin glass. According to this, at least a portion of the transparent window W may be formed of satin glass.

The satin glass is glass subjected to a chemical etching process on a glass surface, and may be formed by an etching process in which the glass is treated with hydrofluoric acid or hydrofluoric acid vapor. A translucent or opaque surface pattern is formed on a surface of the satin glass, and accordingly, the satin glass may form a surface having a fog-like appearance.

The light-blocking part 70b formed by the satin glass as described above may reduce an amount of light flowing into the interior of the door 20b from the front side of the door 20b along the external light travel path.

As an example, at least a portion of the outer glass 23 may be formed of satin glass. In this case, the light-blocking part 70b may include an area of the outer glass 23 that is formed of satin glass.

As another example, an entirety of the outer glass 23 may be formed of satin glass. In this case, the entirety of the outer glass 23 may be provided as the light-blocking part 70b.

As still another example, a translucent layer or an opaque layer may be coated, attached, or printed on a front surface or a rear surface of the outer glass 23. For example, a pattern identical or similar to a pattern formed on the satin glass may be coated, attached, or printed on the front surface or the rear surface of the outer glass 23.

### [Operation and effects of light-blocking part]

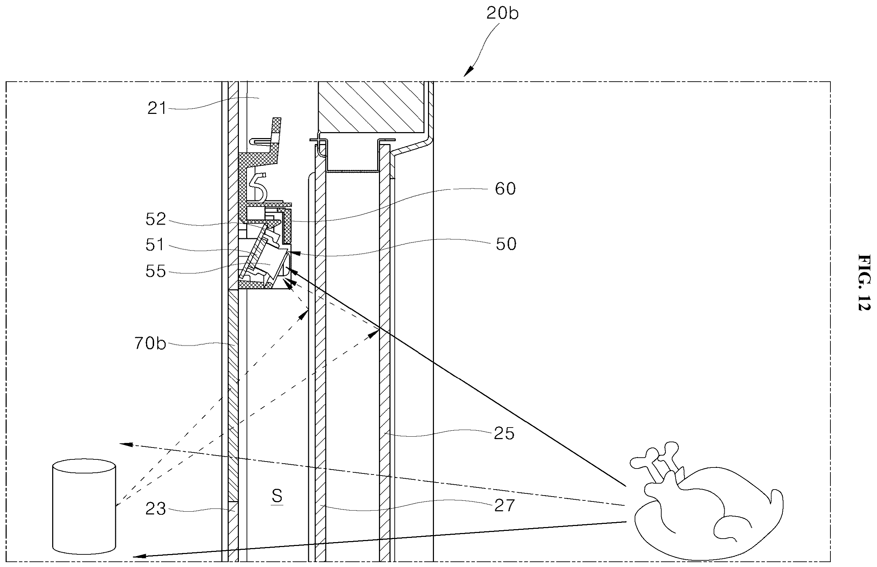

FIG. 12 is a cross-sectional view schematically illustrating an operation of a light-blocking part according to a third embodiment of the present disclosure.

Hereinafter, operation and effects of a cooking appliance according to the third embodiment of the present disclosure will be described with reference to FIGS. 2 and 12.

Referring to FIGS. 2 and 12, the camera 50 and the light-blocking part 70b according to the present embodiment may be disposed in an area of the door 20b in which the transparent window W is formed.

When viewed in a lateral direction, the light-blocking part 70b may be disposed below the camera 50. The light-blocking part 70b may form a translucent layer or an opaque layer that blocks a movement path of light traveling from below the camera 50 toward an area within a field of view of the camera 50.

As an example, the light-blocking part 70b may form a translucent layer or an opaque layer that blocks a movement path of light traveling from a front side of the outer glass 23 toward an area in which the accommodation space S overlaps the field of view of the camera 50.

Light emitted from an external light source may pass through the outer glass 23 from a front side of the door 20b and then be reflected by the inner glasses 25 and 27. When the light that has passed through the outer glass 23 from the front side of the door 20b enters an area in which the accommodation space S overlaps the field of view of the camera 50 (hereinafter, referred to as an "overlapping area"), a possibility that the light reflected by the inner glasses 25 and 27 after entering the overlapping area is captured by the camera 50 may increase.

For example, the light that has passed through the outer glass 23 from the front side of the door 20b may be reflected toward the camera 50 by the mid glass 27 within the overlapping area, and the light reflected in this manner may be captured by the camera 50.

When the light reflected within the overlapping area is captured by the camera 50 as described above, a problem may occur in that image quality of an image captured by the camera 50 is degraded due to appearance of light bleeding, a flare phenomenon, a virtual image, or the like in the image captured by the camera 50.

In consideration of the above, in the present embodiment, the light-blocking part 70b is disposed on a movement path of light traveling from the front side of the outer glass 23 toward the overlapping area, that is, on the external light movement path.

According to this, the light-blocking part 70b may form a translucent layer or an opaque layer that blocks, from below the camera 50, a movement path of light traveling from the front side of the door 20b and from below the camera 50 toward the overlapping area.

Light traveling along the external light movement path from the front side of the door 20b encounters the translucent layer or the opaque layer formed by the light-blocking part 70b in a process of passing through the transparent window W. The translucent layer or the opaque layer formed by the light-blocking part 70b transmits only a portion of light traveling along the external light movement path, and accordingly, an amount of light introduced into an interior of the door 20b from a front side of the door 20b along the external light movement path may be reduced.

That is, only a small amount of light among light traveling along the external light movement path from the front side of the door 20b transmits through the light-blocking part 70b and moves toward the overlapping area.

A portion of the light that has transmitted through the light-blocking part 70b and moved toward the overlapping area as described above may be reflected by the rear glass 25 or the mid glass 27 and then move toward the camera 50.

However, in the cooking appliance according to the present embodiment, only a portion of light traveling along the external light movement path from the front side of the door 20b may transmit through the light-blocking part 70b, and only a portion of the transmitted light may be reflected by the rear glass 25 or the mid glass 27 and then move toward the camera 50.

That is, in the cooking appliance according to the present embodiment, an amount of light incident on the camera 50 after being reflected by the rear glass 25 or the mid glass 27 (hereinafter, referred to as "reflected light") is significantly reduced as compared to an amount of light traveling along the external light movement path from the front side of the door 20b.

Accordingly, even if the reflected light as described above is captured to some extent by the camera 50, the reflected light does not substantially affect an image captured by the camera 50.

If the light-blocking part 70b forms an opaque layer on the transparent window W, light traveling along the external light movement path from the front side of the door 20b is unable to transmit through the light-blocking part 70b. In this case, reflected light is unable to be generated in the interior of the door 20b, and thus the reflected light is unable to affect an image captured by the camera 50.

Meanwhile, light reflected by food inside the cooking chamber 10a may transmit through the inner glasses 25, 27 and be incident into the camera 50. Light that has transmitted through the inner glasses 25 and 27 from inside the cooking chamber 10a is light that has not transmitted through the light-blocking part 70b, and thus may be smoothly incident on the interior of the camera 50.

Accordingly, capturing of food accommodated in the cooking chamber 10a may be smoothly performed without being hindered by the light-blocking part 70b.

In addition, light reflected by food inside the cooking chamber 10a may transmit through the inner glasses 25 and 27 and the outer glass 23 and be emitted toward the front side of the door 20b. When light inside the cooking chamber 10a transmits through the light-blocking part 70b, an image of the interior of the cooking chamber 10a may appear slightly blurred when viewed from outside the cooking chamber 10a.

When the light-blocking part 70b is provided only in a partial area of the transparent window W, for example, only in an upper partial area of the outer glass 23, light inside the cooking chamber 10a may transmit through the inner glasses 25 and 27 and the outer glass 23 without passing through the light-blocking part 70b and be emitted toward the front side of the door 20b. In this case, an image of the inside of the cooking chamber 10a may appear very clear when viewed from outside the cooking chamber 10a.

In summary, the cooking appliance according to the present embodiment allows light moving from inside the cooking chamber 10a toward the camera 50 or toward the front side of the door 20b to move smoothly, while effectively blocking reflected light generated inside the door 20b due to an external light source from being incident on the camera 50.

Accordingly, the cooking appliance of the present embodiment may provide an effect of allowing imaging of food and checking an inside of the cooking chamber 10a from outside the cooking appliance to be smoothly performed, while reducing an influence of light emitted from an external light source on image quality of an image captured by the camera, thereby improving image quality of the image captured by the camera.
The embodiments are described above with reference to a number of illustrative embodiments thereof. However, the embodiments are provided as examples, and numerous other modifications and equivalent embodiments can be drawn by one having ordinary skill in the art from the embodiments. Thus, the technical scope of protection of the subject matter of the disclosure is to be defined according to the following claims.

### [Description of Reference Numerals]

100 : main body

## Claims

1. A cooking appliance comprising:
a main body having a cooking chamber formed therein;
a door disposed at a front side of the main body to open and close the cooking chamber and configured to form a transparent window;
a camera disposed inside the door; and
a light-blocking part configured to block an external light travel path, which is a travel path of light traveling to the camera after passing through at least a portion of the transparent window from a front side of the door.

2. The cooking appliance according to claim 1,
wherein the light-blocking part includes a light-blocking member formed of a material having a lower transparency than the transparent window.

3. The cooking appliance according to claim 2,
wherein the door includes an outer glass disposed at the front side of the main body and an inner glass disposed between the main body and the outer glass,
wherein the transparent window is formed in an overlapping area in which the outer glass and the inner glass overlap in a front-rear direction, and
wherein the camera and the light-blocking member are disposed in a space formed between the outer glass and the inner glass.

4. The cooking appliance according to claim 1,
wherein the camera is disposed at a position biased upward from a vertical center of the transparent window, and
wherein the light-blocking part is disposed below the camera.

5. The cooking appliance according to claim 1,
wherein the light-blocking part includes a plurality of polarizing members disposed in the external light travel path and configured to transmit light vibrating in a direction identical to a polarization axis.

6. The cooking appliance according to claim 5,
wherein the polarizing members include:
a first polarizing member disposed to block at least a portion of the transparent window; and
a second polarizing member having a polarization axis perpendicular to a polarization axis of the first polarizing member.

7. The cooking appliance according to claim 6,
wherein the first polarizing member is installed on the transparent window, and
wherein the second polarizing member is installed on the camera.

8. The cooking appliance according to claim 6,
wherein the door includes an outer glass disposed at the front side of the main body and an inner glass disposed between the main body and the outer glass,
wherein the transparent window is formed in an overlapping area in which the outer glass and the inner glass overlap in a front-rear direction, and
wherein the first polarizing member is installed on the outer glass.
wherein the first polarizing member is disposed to block a travel path of light travelling from a front side of the outer glass toward an overlapping area in which the receiving space and a field of view of the camera overlap each other.

9. The cooking appliance according to claim 1,
wherein the light-blocking part includes a light-blocking surface formed by etching a surface of the transparent window.

10. The cooking appliance according to claim 9,
wherein the light-blocking part includes:
a light-blocking surface formed by etching a surface of the outer glass, or a portion of the outer glass formed to have a lower transparency than the inner glass.
